Europäisches Patentamt

European Patent Office

Office européen des brevets

(19)

(11) Veröffentlichungsnummer: **0 088 287**
A2

# (12) EUROPÄISCHE PATENTANMELDUNG

(21) Anmeldenummer: 83101741.3

(22) Anmeldetag: 23.02.83

(51) Int. Cl.³: **H 02 B 1/16**

(30) Priorität: 08.03.82 DE 3208301

(43) Veröffentlichungstag der Anmeldung: 14.09.83
Patentblatt 83/37

(84) Benannte Vertragsstaaten: **AT BE CH FR IT LI NL SE**

(71) Anmelder: **ARCUS ELEKROTECHNIK Alois Schiffmann GmbH, Streitfeldstrasse 15, D-8000 München 80 (DE)**

(72) Erfinder: **Czernek, Georg, Peter-Rosegger-Strasse 12, D-8905 Mering (DE)**
Erfinder: **Schneider, Walter, Karl-Witthalm-Strasse 30, D-8000 München 70 (DE)**

(74) Vertreter: **Reinländer & Bernhardt Patentanwälte, Orthstrasse 12, D-8000 München 60 (DE)**

(54) Vorrichtung zum lösbaren Halten einer Hochspannungs-Erdungsstange an einem Festpunkt eines Gestells, Mastes, einer Stütze etc.

(57) Die die Hochspannungs-Erdungsstange lösbar an dem Festpunkt haltende Vorrichtung weist eine Verriegelung auf, die in einem Schwenkbereich der Erdungsstange von 0 bis höchstens 80° entsperrt und in einem Schwenkbereich von mindestens 80° bis 90° gesperrt ist.

EP 0 088 287 A2

ACTORUM AG

Vorrichtung zum lösbaren Halten einer Hochspannungs-
Erdungsstange an einem Festpunkt eines Gestells,
Mastes, einer Stütze etc.

---

Die Erfindung betrifft eine Vorrichtung zum lösbaren Halten
einer Hochspannungs-Erdungsstange an einem Festpunkt
eines Gestells, Mastes, einer Stütze etc. nach dem Oberbegriff des Anspruchs 1.

Bei einer bekannten Erdungsvorrichtung erfolgt das lösbare
Halten der Erdungsstange an dem Festpunkt dadurch, daß
die Erdungsstange längs ihres leitenden Teils einen
abgesetzten Durchmesser aufweist und daß am Festpunkt
ein Kontaktkörper in Form eines metallischen Rings angebracht ist, der an einer Stelle geschlitzt ist, wobei der
Schlitz dem Teil der Erdungsstange mit geringem Durchmesser angepaßt ist und in den Schlitz dieser Teil mit
geringerem Durchmesser der Erdungsstange seitlich eingeführt wird. Anschließend wird die Erdungsstange in Richtung
ihrer Achse verschoben, so daß der Teil der Erdungsstange
mit größerem Durchmesser in den Ring eintritt. Der Durchmesser dieses Teils der Erdungsstange ist größer als die
Schlitzbreite, so daß die Erdungsstange nicht aus dem
Ring austreten kann (DE-PS 20 54 125). Die Kontaktierung
der Erdungsstange in dem Ring erfolgt dabei mittels
haarnadelförmiger Kontaktelemente.

Der Erfindung liegt die Aufgabe zugrunde, eine Vorrichtung
zum lösbaren Halten einer Hochspannungs-Erdungsstange
an einem Festpunkt eines Gestells, Mastes, einer Stütze etc.
zu schaffen, die bei gleichbleibendem Durchmesser des
leitenden Teils der Erdungsstange eine in mechanischer
und elektrischer Hinsicht einwandfreie Halterung der
Erdungsstange ergibt, die bei Annäherung der Erdungsstange
an den zu erdenden Leiter eine einwandfreie Verriegelung

ergibt, die ein Abschleudern der Erdungsstange im Falle des Auftretens eines Kurzschlußstroms verhindert. Gelöst wird diese Aufgabe durch die Merkmale des Anspruchs 1. Weiterbildungen der Erfindung sind in den Unteransprüchen angegeben.

Die erfindungsgemäße Ausbildung führt dazu, daß die Halterung selbst die Verriegelung übernimmt, also nicht die Erdungsstange zur Verriegelung beiträgt, vielmehr diese getrennt gehalten, d.h. verschiebbar geführt wird.

Die erfindungsgemäße Vorrichtung ist vor allem für Fälle geeignet, bei denen aus anlagetechnischen Gründen der Festpunkt höher als 2 m, beispielsweise 3 bis 4 m, über dem Erdboden, also außerhalb des Handbereichs der Bedienungsperson liegt, da in diesen Fällen die Bedienungsperson nicht die Erdungsstange an dem Festpunkt beispielsweise durch Festziehen einer Flügelschraube sichern kann. Die erfindungsgemäße Vorrichtung ermöglicht es, die von der Bedienungsperson schräg gehaltene Erdungsstange von unten an den Festpunkt anzusetzen. Beim weiteren Hochschwenken der Erdungsstange verriegelt sich die Halterung selbst. Nach Abnahme der Erdungsstange von dem Festpunkt verbleibt an dem Gestell, dem Mast oder der Stütze nur der damit fest verbundene Bolzen, während der mit dem Bolzen korrespondierende andere Halterungsteil mit der Erdungsstange fest verbunden bleibt, beispielsweise dadurch, daß dieser mit der Erdungsstange einstückig ausgebildet ist.

Die Erfindung wird beispielhaft anhand der Zeichnung erläutert, in der sind

Fig. 1   eine Seitenansicht der Erdungsstange mit dem einen mit dieser verbundenen Halterungsteil,
Fig. 2   eine Seitenansicht einer Ausführungsform der Halterung,

Fig. 3  eine stirnseitige Draufsicht auf den Kugelbolzen
        der Halterung der Fig. 2,

Fig. 4  ein Schnitt einer zweiten    Ausführungsform
        der Halterung,

Fig. 5  eine schematische perspektivische auseinander-
        gezogene Darstellung der Halterung der Fig. 4,

Fig. 6  ein Schnitt einer dritten Ausführungsform der
        Halterung  und

Fig. 7  eine schematische perspektivische auseinandergezogene Darstellung der Halterung der Fig. 6.


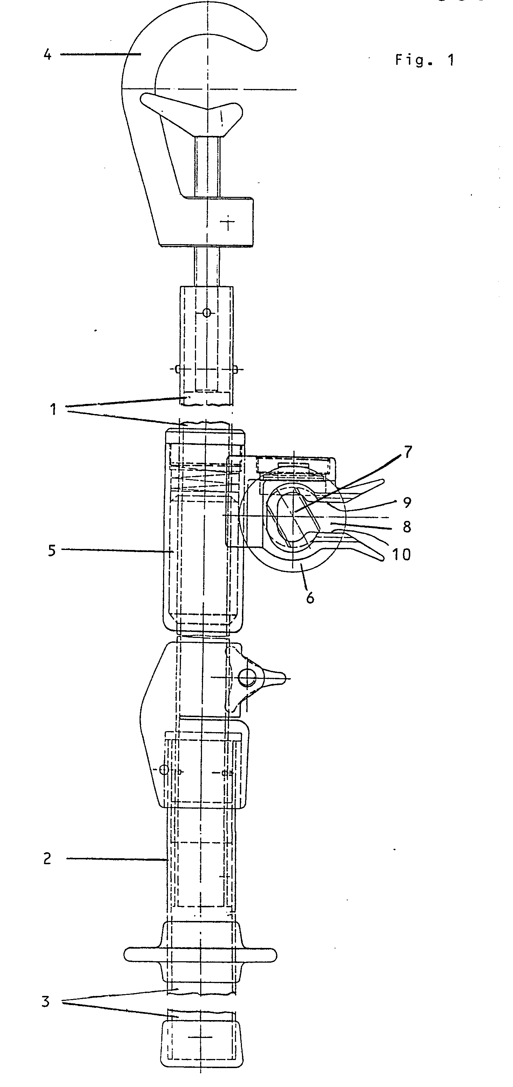

Gemäß Fig. 1 besteht die Erdungsstange aus einem leitenden
Teil 1, einem damit verbundenen isolierten Teil 2 und
einem Handgriff 3. Am oberen Ende des Teils 1 ist eine
an den zu erdenden Leiter anzusetzende Klemme 4 angebracht.
Der leitende Teil 1 der Erdungsstange ist gleitbar in
einer Hülse 5 geführt, an deren Innenwand beispielsweise
ein                              flexibles Leiterband liegt,
an dem die Oberfläche des leitenden Teils der Erdungsstange  unter Reibung anliegt. Mit der Hülse 5 ist das
Gehäuse 6 der Halterung verbunden, z.B. einstückig ausgebildet.


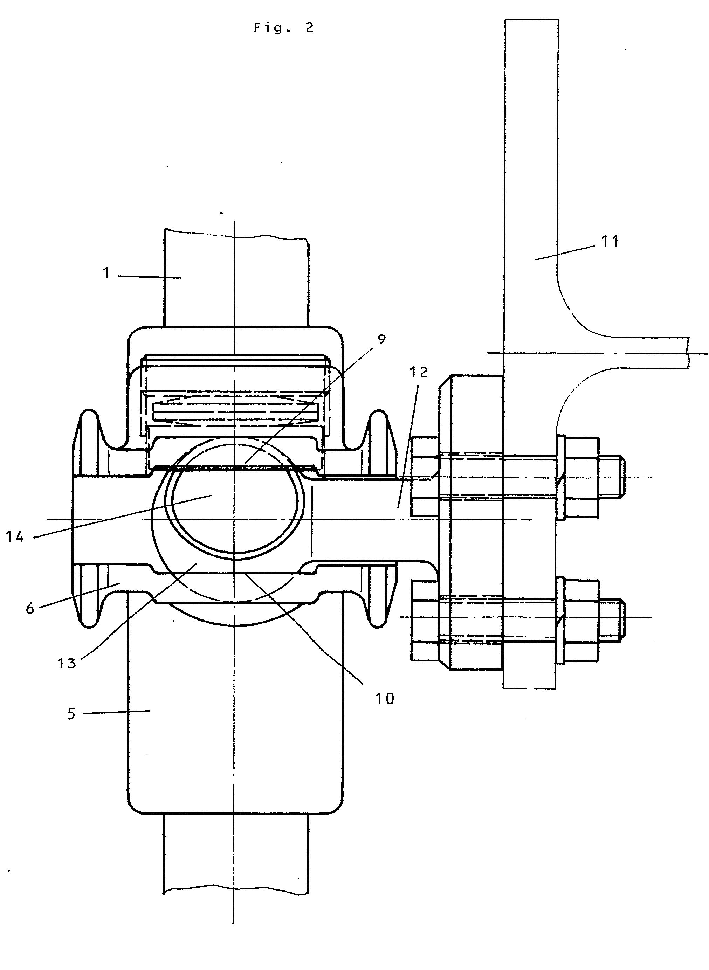

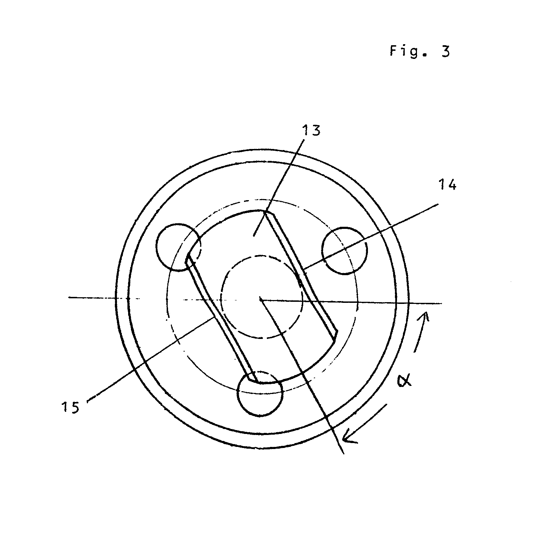

Gemäß Fig. 1 und 2 ist das Gehäuse ein Körper mit einem
hohlkugelförmigen Innenraum 7, der eine davon ausgehende
Öffnung 8 aufweist, die zwei seitliche Einschnürungen
9 und 10 aufweist. Gemäß Fig. 2 und 3 ist an dem Festpunkt
11 ein Bolzen 12 mit einer Kugel 13 am freien Ende angebracht. Die Kugel 13 weist zwei seitliche Abflachungen
14 und 15 auf, deren Ebenen in einem Winkel $\alpha$ von $60°$
(Fig. 3) zur Horizontalen geneigt sind.


Wenn die Erdungsstange 1 mit diesem Schwenkwinkel von
$60°$ an den Festpunkt herangeführt wird, kann der Kugelbolzen 12, 13 in den Hohlkugelkörper 6 eintreten, wobei
die Abflachungen 14 und 15 der Kugel 13 über die

Einschnürungen 9 und 10 gleiten und dann die Kugel 13 in dem Hohlkugelraum 7 eintritt. Nach geringem Verschwenken der Erdungsstange gleiten die nicht abgeflachten Teile der Kugel 13 hinter die nicht eingeschnürten Teile des Hohlkugelkörpers, so daß sich die Halterung selbsttätig verriegelt.

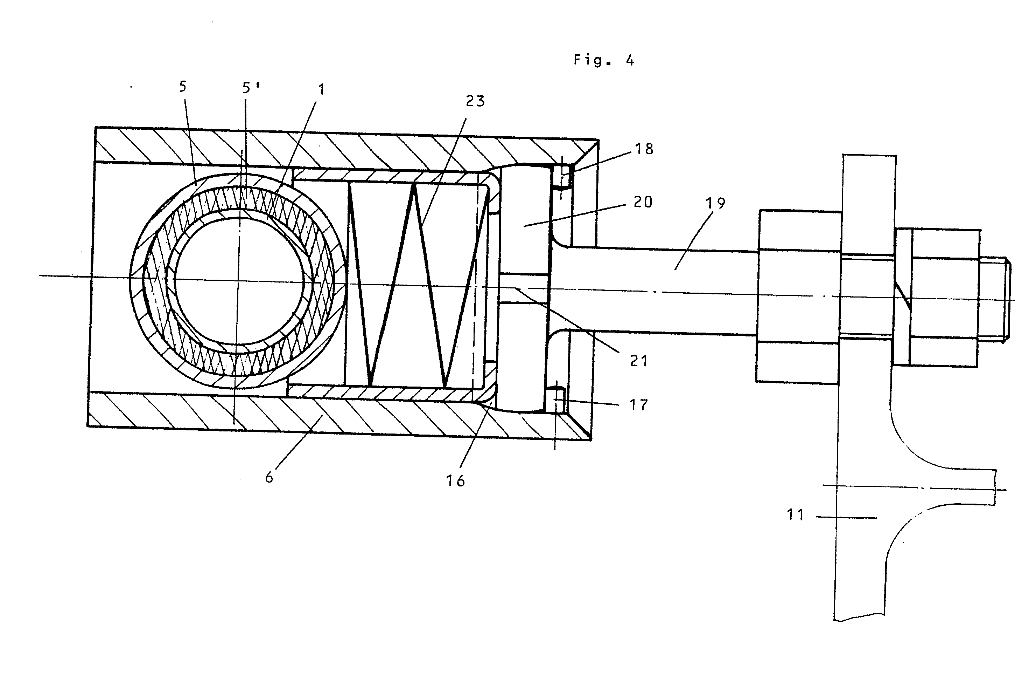

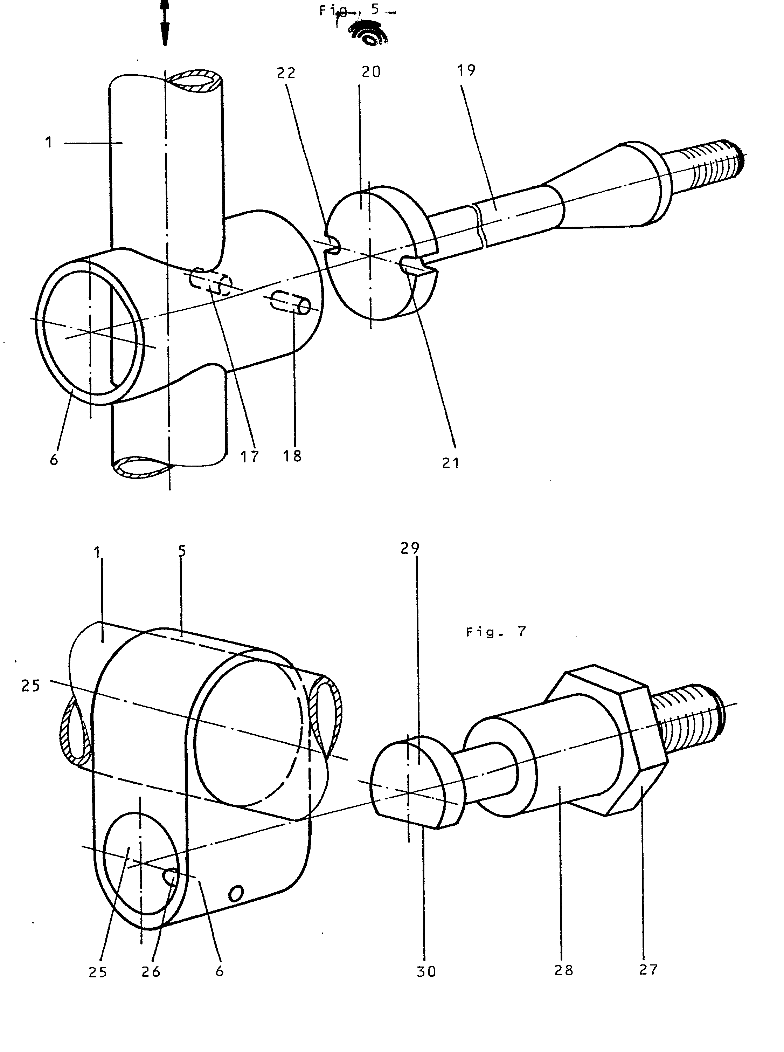

Bei der Ausführungsform nach Fig. 4 und 5 liegt die Hülse 5 mit dem eingelegten flexiblen Leiterband 5' und dem darin gleitbar geführten leitenden Teil 1 der Erdungsstange quer zu dem Gehäuse 6, das einen Ringraum 16 aufweist, in den am vorderen Ende radial Stifte 17 und 18 ragen. An dem Festpunkt 11 ist ein Bolzen 19 angeschraubt, der am freien Ende mit einer Scheibe 20 versehen ist, die seitliche Einkerbungen 21 und 22 aufweist, die in ihren Abmessungen den Stiften 17 und 18 angepaßt sind. Wenn das Gehäuse 6 durch die darin geführte Erdungsstange so gedreht wird, daß die Stifte 17 und 18 den Kerbungen 21 und 22 gegenüber stehen, kann die Scheibe 20 in den Ringraum 16 entgegen dem Druck der Feder 23 eingeführt werden. Nach geringer Verschwenkung der Erdungsstange hindern die Stifte 17 und 18 ein Heraustreten der Scheibe 21 aus dem Ringraum 16.

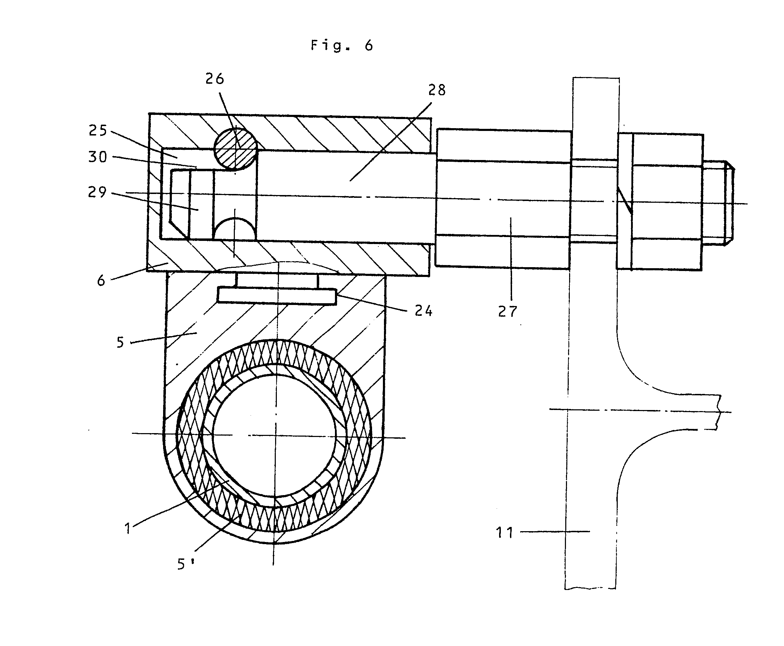

Bei der Ausführungsform nach Fig. 6 und 7 ist die Hülse 5 zur Führung der Erdungsstange seitlich des Gehäuses 6 angebracht, wobei diese Teile durch eine Drehverbindung 24 in einer zur Ansetzschwenkbewegung der Erdungsstange senkrechte Richtung zusätzlich relativ zueinander verdreht werden können. Das Gehäuse 6 weist einen Hohlraum 25 auf, in dessen Wand längs des Umfangs ein Stift 26 ragt. An dem Festpunkt 11 ist ein mit einem Sechskant 27 versehener Bolzen 28 angeschraubt, der am vorderen Ende eine Scheibe 29 aufweist, die mit einer seitlichen Abflachung 30 versehen ist. In der in Fig. 7 gezeigten Stellung kann das Gehäuse 6 durch Handhabung der Erdungsstange

über den Bolzen 28 und die Scheibe 29 geschoben werden, wobei die Abflachung 30 über den Stift 26 gleitet. Damit wird die Lage gemäß Fig. 6 erreicht. Durch geringes Verschwenken der Erdungsstange greift der nicht abgeflachte Teil der Scheibe 29 hinter den Stift 26, womit die Halterung verriegelt ist, d.h. das Gehäuse 6 nicht mehr von dem Bolzen 28 abgezogen werden kann.

Der maximale Entsperrbereich der Verriegelung von 0 bis 80$^{\circ}$ gilt nur für den noch gerade zulässigen, d.h. ungefährlichen Abstand der am vorderen Ende der Erdungsstange angeschlossenen Klemme von dem zu erdenden Leiter, welcher Abstand in etwa einem Schwenkwinkel von 10$^{\circ}$ entspricht. Bei den meisten Anwendungsfällen, wie auch die dargestellten Ausführungsformen zeigen, wird dagegen eine einzige Schwenkstellung der Erdungsstange, bei der die Erdungsstange an dem Festpunkt angesetzt und von diesem abgenommen werden kann, also die Verriegelung entsperrt ist, genügen.

*Reinländer & Bernhardt* Patentanwälte · European Patent Attorneys

MÜNCHEN

3/417

ARCUS ELEKTROTECHNIK
Alois Schiffmann GmbH

Streitfeldstraße 15
8000 München 80

A n s p r ü c h e

1. Vorrichtung zum lösbaren Halten einer Hochspannungs-Erdungsstange an einem Festpunkt eines Gestells, Mastes, einer Stütze etc. mit einer Halterung, die eine Schwenkbewegung der Erdungsstange in einer vertikalen Ebene zuläßt, dadurch gekennzeichnet, daß die Halterung (5,6, 12; 19; 28) eine Verriegelung (7, 13; 17, 18, 20; 26,30) aufweist, die in einem Schwenkbereich der Erdungsstange (1, 2, 3) von 0 bis höchstens 80$^{o}$ entsperrt und in einem Schwenkbereich von mindestens 80$^{o}$ bis 90$^{o}$ gesperrt ist.

2. Vorrichtung nach Anspruch 1, dadurch gekennzeichnet, daß die Verriegelung in einer Schwenkstellung der Erdungsstange von etwa 60$^{o}$ entsperrt ist.

3. Vorrichtung nach Anspruch 1 oder 2, dadurch gekennzeichnet, daß die Halterung aus einem von dem Festpunkt (11) ausgehenden Kugelbolzen (12, 13) mit mindestens einseitiger Abflachung (14, 15) und einem die Erdungsstange (1) führenden, der Kugel (13) angepaßten Hohlkugelkörper (6) besteht, der eine von dem Hohlkugelraum (7) ausgehende Öffnung (8) mit mindestens einer einseitigen sehnenartigen Einschnürung (9, 10) aufweist.

4. Vorrichtung nach Anspruch 3, dadurch gekennzeichnet, daß die Kugel zwei seitliche gegenüberliegende Abflachungen aufweist und die Öffnung des Hohlkugelkörpers mit zwei gegenüberliegenden Einschnürungen versehen ist.

5. Vorrichtung nach Anspruch 1 oder 2, dadurch gekennzeichnet, daß die Halterung aus einem von dem Festpunkt (11) ausgehenden Bolzen (19) mit einer Scheibe (20) am freien Ende, die seitliche Einkerbungen (21, 22) aufweist, und einem die Erdungsstange (1) führenden Gehäuse (6) mit einem der Scheibe angepaßten Ringraum (16), in den radial den Einkerbungen angepaßte Stifte (17, 18) ragen, besteht.

6. Vorrichtung nach Anspruch 1 oder 2, dadurch gekennzeichnet, daß die Halterung aus einem Bolzen (28) mit einer Scheibe (29) am freien Ende, die eine seitliche Abflachung (30) aufweist, und aus einem die Erdungsstange führenden Gehäuse (6) mit einem dem Bolzen angepaßten Hohlraum (25), in dessen Wand ein der Abflachung der Scheibe angepaßter Stift (26) ragt, besteht.

1/6

0088287

Fig. 1

Fig. 2

0088287

Fig. 3

Fig. 4

0088287

0088287

Fig. 5

Fig. 7

Fig. 6